Europäisches Patentamt

European Patent Office

Office européen des brevets

(19)

(11) **EP 1 180 262 B1**

(12) **EUROPÄISCHE PATENTSCHRIFT**

(45) Veröffentlichungstag und Bekanntmachung des
Hinweises auf die Patenterteilung:
**26.05.2004  Patentblatt 2004/22**

(21) Anmeldenummer: **00920313.4**

(22) Anmeldetag: **05.05.2000**

(51) Int Cl.7: **G11B 7/24**, G11B 7/26

(86) Internationale Anmeldenummer:
**PCT/CH2000/000249**

(87) Internationale Veröffentlichungsnummer:
**WO 2000/070606 (23.11.2000 Gazette 2000/47)**

(54) **VERFAHREN ZUM HERSTELLEN VON HYBRID-DISKS UND HYBRID-DISK**

METHOD FOR PRODUCING A HYBRID DISK, AND HYBRID DISK

PROCEDE DE PRODUCTION DE DISQUES HYBRIQUES ET DISQUE HYBRIDE

(84) Benannte Vertragsstaaten:
**AT BE CH CY DE DK ES FI FR GB GR IE IT LI LU
MC NL PT SE**

(30) Priorität: **14.05.1999  CH 92199**

(43) Veröffentlichungstag der Anmeldung:
**20.02.2002  Patentblatt 2002/08**

(73) Patentinhaber: **Unaxis Balzers
Aktiengesellschaft
9496 Balzers (LI)**

(72) Erfinder: **DUBS, Martin
CH-7304 Maienfeld (CH)**

(74) Vertreter: **Troesch Scheidegger Werner AG
Schwäntenmos 14
8126 Zumikon (CH)**

(56) Entgegenhaltungen:
**EP-A- 0 467 705          EP-A- 0 516 178
EP-A- 0 762 406          EP-A- 0 834 874
US-A- 5 450 380**

• **PATENT ABSTRACTS OF JAPAN vol. 1995, no.
09, 31. Oktober 1995 (1995-10-31) & JP 07 141696
A (PIONEER ELECTRON CORP), 2. Juni 1995
(1995-06-02)**

EP 1 180 262 B1

## Beschreibung

Die vorliegende Erfindung betrifft ein Verfahren zum Herstellen von Hybrid-Disks, mit einem ersten, in einem gegebenem Spektralband transparenten Substrat sowie, dahinter, einem in besagtem Band halbdurchlässigen Schichtsystem, weiter, wiederum dahinter, einem weiteren, in besagtem Band transparenten Substrat und, schliesslich wiederum dahinter, einem Reflexionsschichtsystem. Die Erfindung betrifft weiter eine Hybrid-Disk.

Es wird auf die im Rahmen der Recherche internationaler Art gefundene Dokumente hingewiesen, nämlich:

- EP 0 516 178 (JP 4353641)
- EP 0 762 406 (US 5 965 228; WO 9709715; JP 9265659)
- JP 0714696 (Patent Abstract of Japan Vol. 1995, No. 09, 31. Oktober 1995)
- EP 0 467 705 (US 5 490 131; JP-4364248)
- US 5 450 380
- EP 0 834 874,

vorerst ohne jegliche Wertung ihrer Bedeutung für die vorliegende Erfindung.

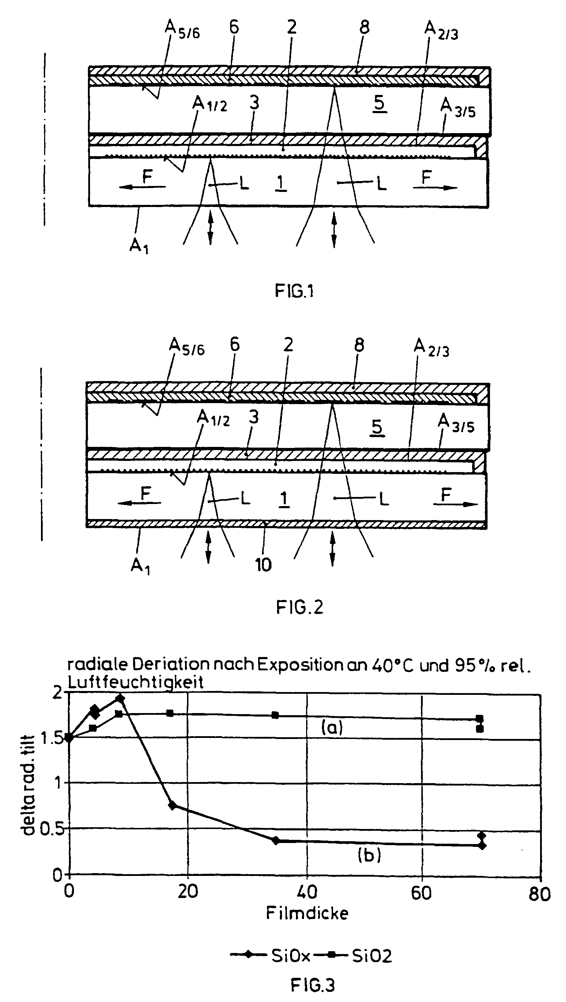

In Fig. 1 ist schematisch der übliche Aufbau einer Hybrid-Disk, auch als Super Audio CD bekannt, dargestellt. Die Disk weist ein erstes, transparentes Substrat 1 auf, dessen eine Fläche $A_1$ aussen gegen Umgebungsatmosphäre liegt. An seiner zweiten, innenliegenden Fläche $A_{1/2}$ ist ein halbdurchlässiges Schichtsystem 2 vorgesehen, welches wiederum mit seiner innenliegenden Fläche $A_{2/3}$ an einer Klebstoffschicht 3 anliegt. Die Innenfläche $A_{3/5}$ der Klebstoffschicht liegt an einem weiteren, transparenten Substrat 5 an, dessen innenliegende Fläche $A_{5/6}$ an einem Reflexionsschichtsystem 6 anliegt. Letztere ist üblicherweise gegenüber Umgebungsatmosphäre durch eine Schutzschicht 8, z. B. eine Schutzlackschicht, geschützt.

Im Bereich der Fläche $A_{1/2}$ ist ein Informations-Prägemuster vorgesehen, ein zweites im Bereich der Fläche $A_{5/6}$. Laserlicht L innerhalb eines vorgegebenen Spektralbandes, üblicherweise im Bereiche zwischen 600 nm und 800 nm, insbesondere zwischen 630 nm und 780 nm, wird, zum Auslesen der Information, auf die Disk, wie in Fig. 1 schematisch dargestellt, aufgebracht. Die erwähnte Information wird einerseits aus dem reflektierten Teilstrahl von der halbdurchlässigen Schicht 2 ausgelesen, anderseits an dem vom Reflexionsschichtsystem reflektierten Teilstrahl. Entweder wird ein einziger Laserstrahl zum Auslesen der gesamten Information eingesetzt, welcher dann an der halbdurchlässigen Schicht 2 geteilt wird, oder es werden zwei verschiedene Laserstrahlen eingesetzt mit im genannten Spektralband spezifischen Wellenlängen

Aus der EP 0 762 406 die zur Definition der zweiteiligen Form dient, ist ein Informationsträger eingangs genannter Art bekannt, bei dem das weitere Substrat, als Zwischenlage, aus einer dielektrischen Schicht sowie einer Abstandshalteschicht, insbesondere aus einem UV-härtebaren Lack, besteht.

Wesentlich im Rahmen der vorliegenden Erfindung ist der strukturelle Aufbau derartiger Hybrid-Disks, und nicht die Informationsauslese- oder -aufbringe-Technik, beide sind bekannt.

Ersichtlich ist, im Rahmen der vorliegenden Erfindung wesentlich, dass der Schichtungs-Aufbau der Disk asymmetrisch ist, während einerseits die Substratfläche $A_1$ an Umgebungsatmosphäre liegt, liegt anderseits ein Schichtsystem, sei dies eine Schutzschicht 8, sei dies das Reflexionsschichtsystem 6, an Umgebungsatmosphäre.

Substratmaterialien, welche für die erwähnten Disks eingesetzt werden, wie beispielsweise Polycarbonat, nehmen - unbeschichtet - relativ rasch Feuchtigkeit aus der Umgebung auf. Damit ergibt sich, wie aus Fig. 1 ohne weiteres ersichtlich und wie mit den Pfeilen F angedeutet, eine Ausdehnung des äusseren Substrates 1, womit sich die Disk bimetallähnlich, gemäss Fig. 1, konkav nach oben biegt. Bei Erniedrigung der Umgebungsluftfeuchtigkeit zieht sich das erwähnte Substrat 1 zusammen, die Disk verbiegt sich gemäss Darstellung von Fig. 1 konkav nach unten.

Diese Verformung wird durch die sogenannte radiale Deviation charakterisiert. Sie ist definiert als Winkelabweichung eines von der Substratoberfläche $A_1$ reflektierten Strahles und darf für den DVD-Standard (DVD: Digital Video Disks) $\pm$ 0,8° nicht überschreiten. Eine Erwärmung auf 30° bei einer relativen Luftfeuchtigkeit von 95 % bewirkt aber eine Änderung der radialen Deviation von rund 1,2°.

Grundsätzlich ist es bekannt, Substrate von Speicherscheiben gegen Feuchtigkeit mittels einer Feuchtigkeitsschutzschicht zu schützen. So ist es aus der EP 0 516 178 bekannt an einem Informationsträger eine erste Feuchtigkeitsschutzschicht vorzusehen, und zwar so, dass eine Informations-Aufnahmeschicht zwischen einem Substrat und der erwähnten Schutzschicht, eine Reflexionsschicht zwischen der Schutz- und der Aufnahmeschicht liegt. Hinzukommend wird das Substrat auf der der erwähnten Beschichtung abgewandten Seite mit einer weiteren Feuchtigkeitsschutzschicht versehen. Sie besteht aus $SiO_2$.

Die vorliegende Erfindung geht aus von der Aufgabe feuchtigkeitsbedingte Verbiegungsprobleme an den eingangs erwähnten Disks so effizient wie nur möglich zu lösen.

Dies wird beim eingangs genannten Verfahren dadurch gelöst, dass man über dem ersten, transparenten Substrat ein Feuchtigkeitsschutzschichtsystem aus mindestens einer Schicht aus unter-stöchiometrischem Siliziumoxid ablegt und/oder aus mindestens einer Schicht aus Siliziumoxinitrid.

Oft werden Beschichtungsverfahren zum Aufbringen dieser Feuchtigkeitsschutzschicht eingesetzt, welche nicht in den Produktionstakt von Hybrid-Disks passen, da sie z.B. Schutzlackierung ersetzen oder Vakuumbeschichtungstechniken, die sich grundsätzlich - insbesondere auch, was Beschichtungszeiten anbelangt - von denjenigen unterscheiden, die zum Ablegen der übrigen Schichtsysteme an der Hybrid-Disk eingesetzt werden. Wir unterscheiden folgende Typen von Vakuumbeschichtungsverfahren:

- Sputtern, dabei reaktives oder nicht-reaktives mit allen bekannten elektrischen Speisungstechniken, nämlich DC-Speisung, AC+DC-Speisung, AC-Speisung bzw. gepulste DC-Speisung, jeweils magnetfeldunterstützt oder nicht.

- Arcverdampfen durch Ausnützung einer Niederspannungs-Hochstrombogenentladung, durch welche Targetmaterial am wandernden Fusspunkt aufgeschmolzen wird (Arc Evaporation), wiederum reaktiv oder nicht-reaktiv, Magnetfeld-beeinflusst oder nicht.

- Thermisches Verdampfen, wie Elektronenstrahlverdampfen, reaktiv oder nicht-reaktiv.

- CVD-Verfahren, bei denen Material ohne Plasmaunterstützung aus der Gasphase abgeschieden wird

- Plasmapolymerisation.

PECVD-Verfahren werden grundsätzlich Mischverfahren genannt, bei welchen, wie beispielsweise beim reaktiven Sputtern, plasmaunterstützt Beschichtungsmaterial aus der Gasphase abgeschieden wird.

Wenn im Rahmen der vorliegenden Beschreibung von gleichen Typen von Vakuumbeschichtungsverfahren gesprochen wird, so sind obgenannte Typen gemeint.

Bei der Durchführung des erfindungsgemässen Verfahrens nach Anspruch 2 wird erreicht, das sich das Ablegen des Feuchtigkeitsschutzschichtsystems einfach in bestehende Fertigungszyklen für Hybrid-Disks integrieren lässt.

Berücksichtigt man nämlich, dass die Hybrid-Disks in einer Inline-Abfolge von Beschichtungszyklen - wie für das Ablegen des halbdurchlässigen Schichtsystems und des Reflexionsschichtsystmes - gefertigt werden, so ist ersichtlich, dass man sowohl bezüglich Anlagenkonfiguration wie auch bezüglich Takt-Steuerung wesentliche Vorteile erwirkt, wenn wie in Anspruch 2 vorgeschlagen vorgegangen wird.

Im weiteren werden oft Feuchtigkeitsschutzschichten auf Speicherscheiben durch Verfahren abgelegt, welche z.B. mehrere Behandlungsschritte erfordern, welche sich relativ schwierig automatisieren und relativ schwierig beherrschen lassen, wie beispielsweise durch Wärmebehandlung, dann Flüssigbeschichtung, spin coating etc. oder z.B. mittels Plasmavorbehandlung, Beschichten, dann Wärmebehandeln, nur als Beispiele erwähnt. Durch Vorgehen nach Anspruch 3 wird erreicht, dass sich das erfindungsgemässe Verfahren relativ einfach automatisieren lässt.

Bevorzugterweise werden beide zusätzlichen Vorgehensweisen nämlich

- Einsatz eines bereits für das Disk-Herstellungsverfahren eingesetzten Beschichtungsverfahrens,

- Ablegen eines Feuchtigkeitsschutzschichtsystems durch Sputtern,

mit dem erfindungsgemässen Vorgehen kombiniert.

Um zu verhindern, dass durch Aufbringen des erwähnten Feuchtigkeitsschutzschichtsystems auf die Substratfläche $A_1$ gemäss Fig. 1 namhafte Lasersignal-Verluste durch Reflexion an der Substrat-Vorderseite in Kauf zu nehmen sind, wird weiter vorgeschlagen, dass man den Brechungsindex des Materials bzw. der Materialien des Feuchtigkeitsschutzschichtsystems höchstens gleich dem Brechungsindex des Materials des ersten, transparenten Substrates wählt, dabei insbesondere den erwähnten Brechungsindex n im Bereiche

$$1{,}47 \leq n \leq 1{,}7,$$

dabei bevorzugt im Bereich

$$1{,}5 \leq n \leq 1{,}6,$$

insbesondere bevorzugt

$$n \leq 1{,}57$$

wählt, unter Berücksichtigung herkömmlicher Substratmaterialien, wie beispielsweise von Polycarbonat mit einem Brechungsindex $n_s = 1{,}57$.

Um im Weiteren die durch Aufbringen des Feuchtigkeitsschutzschichtsystems entstehenden Absorptionsverluste zu minimalisieren, wird vorgeschlagen, als Material bzw. als Materialien des Feuchtigkeitsschutzschichtsystems ein Material mit einer Extinktionskonstanten k zu wählen, für welche gilt:

$$10^{-4} \leq k \leq 5 \times 10^{-3},$$

dabei bevorzugt

$$k \leq 10^{-3}.$$

Wird das Feuchtigkeitsschutzschichtsysten durch Sputtern abgelegt, so bevorzugterweise durch reaktives Sputtern eines Siliziumtargets in Sauerstoff enthaltender Atmosphäre.

Zur Herstellung einer Siliziumoxinitridschicht wird zusätzlich Stickstoff als Reaktivgas verwendet. Dabei sind relativ hohe Anteile an Stickstoff im Reaktivgasgemisch erforderlich, um die Stöchiometrie der Schicht wesentlich zu verändern. Das Beifügen von Stickstoff zum Reaktivgas erhöht ausserdem die Stabilität des Sputterprozesses, da das Vergiften des Targets durch Sauerstoff verringert wird. Zusätzlich wird auch die Gleichförmigkeit der Beschichtung verbessert, was die Abscheidung dünnerer Schichten bei gleicher Wirkung erlaubt. Es ist durchaus möglich, das Feuchtigkeitsschutzschichtsystem durch zeitlich gestaffeltes Ablegen von Siliziumoxid und von Siliziumoxinitrid, gegebenenfalls mit fliessendem Übergang, durch entsprechende Steuerung der Reäktivgaszusammensetzung zu realisieren.

Es wird weiter bevorzugt vorgeschlagen, das Feuchtigkeitsschutzschichtsystem mit einer Dicke von mindestens 10 nm und, bevorzugt, von höchstens 50 nm, abzulegen.

Das Einhalten der erwähnten optischen Konstanten n und k wird bei Einsatz von unterstöchiometrischem Siliziumoxid als Material des Feuchtigkeitsschutzschichtsystems durch genauen Einhalt einer erwünschten Stöchiometrie x/y an der $Si_xO_y$-Schicht realisiert, was bevorzugterweise durch Verfolgen des Beschichtungsprozesses mittels eines Plasmaemissions-Monitors und/oder durch Messen des Reaktivgas-Partialdruckes überwacht und, mit den entsprechenden Messgrössen als IST-Werte, der Beschichtungsprozess gesteuert oder geregelt wird, z.B. durch manuellen oder, bevorzugt, durch automatischen Eingriff beispielsweise auf Entladungsstrom und/oder -spannung und/oder Reaktivgasfluss.

Bei Verwendung von O2/N2-Reaktivgasgemischen für die Siliziumoxinitridschicht ist die Einstellung des Brechungsindex über das Mischungsverhältnis und die Einstellung des Reaktivgasflusses sogar ohne Überwachung und Regelung dieser Grössen (Targetspannung, Reaktivgaspartialdruck) möglich.

Ein besonders geeignetes Beschichtungsverfahren des Typs Sputtern ist DC-Sputtern, wie insbesondere Magnetronsputtern. Aufgrund der elektrischen Isolationseigenschaften als Feuchtigkeitsschutzschichtsystem eingesetzter Materialien, nämlich des unterstöchiometrischen Siliziumoxids und/oder Siliziumoxinitrides, sollen, bei DC-Sputtern, Massnahmen gegen das bekannte sogenannte "arcing" getroffen werden, Massnahmen, die verhindern, dass aufgrund einer Isolationsbelegung auf dem leitenden Targetmaterial eine elektrische Störfunkenbildung entsteht. Dies wird durch Verwendung eines halbleiterdotierten Siliziumtargets gelöst und/oder dadurch, dass zwischen einem die Sputterquelle speisenden DC-Generator und der Sputterquelle ein intermittierend hochohmig und niederohmig geschalteter Stromkreis vorgesehen wird. Bezüglich dieser Technik sei vollumfänglich auf die EP-A-564 789 derselben Anmelderin verwiesen.

Eine weitere Variante, das erwähnte Arcing zu verhindern, ist, die Sputterbeschichtung intermittierend in derselben reaktiven Prozessatmosphäre ab mindestens zwei vorgesehenen Targets durchzuführen, insbesondere ab konzentrischen Ringtargets.

Im Weiteren vereinfacht sich die Feuchtigkeitsschutzschichtsystem-Abscheidung dadurch ganz wesentlich, dass die Hybrid-Disk-Werkstücke auch beim diesbezüglichen Beschichtungsverfahren bezüglich der Beschichtungsquelle stationär gehalten werden können. Dies erleichtert ganz wesentlich das Laden und Entladen der Werkstücke an den zugeordneten Beschichtungsprozess-Stationen.

Eine erfindungsgemässe Hybrid-Disk mit einem ersten, in einem gegebenen Spektralband transparenten Substrat, dahinter einem im gegebenen Band halbdurchlässigen Schichtsystem, dahinter einem weiteren, im gegebenen Band transparenten Substrat und, weiterhin dahinter, einem Reflexionsschichtsystem, weist zwischen dem ersten Substrat und Umgebungsatmosphäre ein Schichtsystem aus unterstöchiometrischem Siliziumoxid und/oder Siliziumoxinitrid auf.

Die Erfindung wird anschliessend anhand weiterer Figuren sowie eines Beispiels bevorzugter Ausführungsform erläutert.

Die weiteren Figuren zeigen:

Fig. 2 in einer Darstellung analog zu Fig. 1, schematisch einen Ausschnitt aus einer erfindungsgemässen Hybrid-Disk,

Fig. 3 in Abhängigkeit der abgelegten Feuchtigkeitsschutzschicht-Dicke, die resultierende radiale Deviation an einer Hybrid-Disk bei Schutzschicht aus stöchiometrischem Siliziumdioxid (a) bzw. unterstöchiometrischem Siliziumoxid (b).

In Fig. 2 ist der Ausschnitt einer Hybrid-Disk gemäss Fig. 1 mit denselben Bezugszeichen dargestellt, weiterentwickelt aber gemäss vorliegender Erfindung. Über der Fläche $A_1$ des ersten Substrates 1 ist erfindungsgemäss, und wie einleitend bereits ausführlich beschrieben wurde, das Feuchtigkeitsschutzschichtsystem 10 aus erfindungsgemässem Material vorgesehen. Es erübrigt sich an dieser Stelle, und aufgrund der bereits einleitend gegebenen Erläuterungen zur vorliegenden Erfindung, diese mit Blick auf Fig. 2 zu wiederholen.

Es wurden Hybrid-Disks aus zwei Substraten 1 bzw. 5 gemäss Fig. 2 von je 0,6 mm Dicke mit dem halbdurchlässigen Schichtsystem 2 und dem Reflexionsschichtsystem 6 beschichtet und - 3 - verklebt. Die Fläche $A_1$ wurde, mit unterschiedlichen Schichtdicken, mit stöchiometrischem $SiO_2$ bzw. unterstöchiometrischem $SiO_x$ mit x < 2 beschichtet. Die Schichten wurden mittels reaktivem DC-Sputtern - Magnetronsputtern - ab metallischem Silizium in Sauerstoff enthaltender Atmosphäre aufgebracht..An einer handelsüblichen Anlage SDS131 der Anmelderin wurden folgende Prozessbedingungen eingestellt:

| Sputterleistung | 3 kW |
|---|---|
| Argonfluss | 30 sccm (standard cubic centimeter per minute) |
| Reaktivgas | $O_2$, mit zwischen 45 sccm für unterstöchiometrische Schichten und 50 sccm für stöchiometrische Schichten eingestelltem Fluss. |

Es wurde eine Magnetronsputterquelle ARQ131 der Anmelderin, mit bewegtem Magnetsystem, eingesetzt, zur Erzielung eines möglichst regelmässigen Targetabtrages.

Zur Vermeidung des oben beschriebenen Arcings wurde zwischen einem DC-Generator zur Magnetronspeisung und den Magnetron-Quellenanschlüssen ein intermittierend hoch- und niederohmig geschalteter Stromkreis bzw. Parallelchopper eingesetzt.

Es ergab sich eine Beschichtungsrate von 8,7 nm/sec., was für die bevorzugt eingesetzten Schichtdicken von 20 bis 50 nm eine Beschichtungszeit von ca. 2,5 bis ca. 6 sec. ergibt. Es resultierten Schichten mit

n = 1,65; k = 0,002 für unterstöchiometrisches Siliziumoxid bzw.

n = 1,47; k = 0,0002 für stöchiometrisches Siliziumdioxid.

Anschliessend wurden die beschichteten Hybrid-Disks einem Klimatest unterzogen:

Von einem Anfangszustand entsprechend 20°C Umgebungstemperatur und ca. 40 % rel. Luftfeuchtigkeit wurden die Hybrid-Disks während 24 h bei einer Umgebungstemperatur von 50°C und einer rel. Luftfeuchtigkeit von ca. 95 % gelagert.

In Fig. 3 sind die Testresultate zusammengestellt. Es ist ohne weiteres ersichtlich, dass, ähnlich Hybrid-Disks überhaupt ohne Feuchtigkeitsschutzbeschichtungssystem, Hybrid-Disks mit einer stöchiometrischen $SiO_2$-Beschichtung sich aufgrund der Versuchsbedingungen und aufgrund von Wasseraufnahme um 1,5 bis 2° radialer Deviation verbiegen. Bei Hybrid-Disks, welche mit unterstöchiometrischem Siliziumoxid beschichtet wurden, ergab sich eine äusserst relevante Reduktion dieser radialen Deviation, abhängig von der Schichtdicke, bis um einen Faktor von mehr als 3. Ebenso gute Ergebnisse ergeben sich bei Ablegen des Feuchtigkeitsschutzschichtsystems aus Siliziumoxinitrid. Dabei wird als Reaktivgas ein $O_2/N_2$-Gasgem eingesetzt und die optischen Konstanten durch das Reaktivgasmischungsverhältnis bzw. die Partialdrücke eingestellt.

Es zeigt sich weiter, dass die Beschichtungsmaterialien, nämlich unterstöchiometrisches Siliziumoxid bzw. Siliziumoxinitrid, noch weitere wesentliche Vorteile mit sich bringen:

Bei Temperaturänderungen dehnen sich die Hybrid-Disks und insbesondere die Substrate 1 und 5, damit auch Substrat 1 gemäss Fig. 2, aus. So ist der thermische Ausdehnungskoeffizient von Polycarbonat $\alpha$ als ein üblicherweise als Substrat eingesetztes Material $65 \times 10^{-6}$/K. Die im Feuchtigkeitsschutzschichtsystem resultierenden Spannungen sind proportional zum Elastizitätsmodul E des Schichtmaterials. Stöchiometrisches Siliziumdioxid weist einen E-Modul von rund 30 bis 100 Gpa auf, der E-Modul von Polycarbonat ist 2 bis 2,5 Gpa. Das stöchiometrische Siliziumdioxid ist sehr spröde und bildet leicht Risse, durch welche, schichtmaterialunabhängig, Feuchtigkeit zum Substrat. durchdringt.

Unterstöchiometrisches Siliziumoxid bzw. Siliziumoxinitrid hat bedeutend bessere mechanische Eigenschaften, d.h. einen wesentlich kleineren Elastizitätsmodul E und eine wesentlich höhere Bruchdehnung, verglichen mit stöchiometrischem Siliziumdioxid. Die erwähnten bevorzugten Materialien lassen sich, wie gezeigt wurde, einfach durch reaktives Sputtern von Siliziumtargets mit hoher Abscheiderate ablegen. Mit Hilfe gegebenenfalls überwachter Prozessführung wird dabei die Stöchiometrie so gestellt, dass der Brechungsindex des unterstöchiometrischen Siliziumoxids bzw. Siliziumoxinitrides im geforderten Bereich liegt. Dabei ist in diesem Spektralbereich das unterstöchiometrische Siliziumoxid bzw. das ebenfalls unterstöchiometrische Siliziumoxinitrid, welches bezüglich Brechungsindex die genannten Anforderungen erfüllt, auch praktisch absorptionsfrei.

Weil im Unterschied zum stöchiometrischen Siliziumdioxid das unterstöchiometrische Siliziumoxid bzw. Siliziumoxinitrid wesentlich weniger zu Rissbildung neigt, bildet es eine praktisch wasserundurchlässige, effiziente Schutzbarriere auf dem Substrat, und zwar gar ab den minimal angegebenen Schichtdicken von 10 nm. Die zum Ablegen hierzu erforderlichen Sputterzeiten von 2,5 bis 6 sec. liegen gut innerhalb des Zeitfensters, welches für Sputterbeschichten sowohl des Reflexionsschichtsystems wie auch des halbdurchlässigen Schichtsystems erforderlich sind. Dabei ist insbesondere zu betonen, dass das halbdurchlässige Schichtsystem bevorzugt durch reaktives Siliziumsputtern abgelegt wird, womit es sogar möglich ist, an ein und derselben Sputterstation beide Beschichtungen, nämlich halbdurchlässiges Schichtsystem und Feuchtigkeitsschutzschichtsystem, vorzunehmen.

Weil im Weiteren die optischen und mechanischen Eigenschaften des Feuchtigkeitsschutzschichtsystems, aus unterstöchiometrischem Siliziumoxid, stark vom exakten Einhalten eines erwünschten Stöchiometrieverhältnisses abhängen, ist es - wie erwähnt wurde - angezeigt, den Beschichtungsprozess zu überwachen. Dies kann mittels eines Plasmaemissions-Monitors, z.B. durch Messung des Intensitätsverhältnisses von Sauerstoff- und Argon-Plasmaemissionslinien, oder durch Messung von Farbveränderungen des Plasmas erfolgen, oder durch Überwachung des Reaktivgaspartialdruckes mittels Massenspektrometer, und In-situ-Regelung des Prozesses durch Stelleingriff insbesondere auf den Reaktivgasfluss, ggf. auf die elektrischen Entladungsparameter. Ist die Konstanz eingestellter Prozessparameter während einer ausreichend langen Zeit gewährleistet, so kann ein Wegdriften dieser Parameter und dabei Wegdriften eingestellter Stöchiometrieverhältnisse auch durch Messung vom Brechungsindex an gefertigten Feuchtigkeitsschutzschichten, beispielsweise mittels Ellipsometer und/oder Absorptionsmessung, nach der Beschichtung erfolgen, mit entsprechendem Korrektureingriff auf den Prozess.

Beim Ablegen von Siliziumoxinitrid kann eine entsprechende Überwachung des Prozesses aufgrund der hohen Prozessstabilität gar entfallen.

Durch das erfindungsgemässe Vorgehen wird einerseits die Fertigungszeit von Hybrid-Disks nicht oder nur unmassgeblich verlängert, der bevorzugt eingesetzte Beschichtungsprozess ist ohne weiteres automatisierbar, leicht beherrschbar und integriert sich ausgezeichnet in die Beschichtungsverfahren, die ohnehin bei der Hybrid-Disk-Herstellung bevorzugt eingesetzt werden. Durch Einsatz von unterstöchiometrischem Siliziumoxid und/oder von unterstöchiometrischem Siliziumoxinitrid als Feuchtigkeitsschutzschichtsystemmaterial werden die Spezifikationen für die radiale Deviation derartiger Disks ohne weiteres eingehalten. Im weiteren können die bevorzugt eingesetzten Materialien durch Einsatz ungiftiger, preiswerter Rohstoffe realisiert werden, nämlich von Silizium, Sauerstoff und Stickstoff. Betont sei aber, dass insbesondere dann, wenn für das Ablegen anderer Schichtsysteme an Hybrid-Disks, nämlich des halbdurchlässigen Schichtsystems und des Reflexionsschichtsystems, andere Verfahrenstypen als Sputtern eingesetzt werden, z.B. CVD oder Plasmapolymerisation, im Rahmen der vorliegenden Erfindung'auch zum Ablegen des Feuchtigkeitsschutzschichtsystems, nicht länger Sputtern, sondern - wie erwähnt wurde - der erwähnte Beschichtungsverfahrenstyp bevorzugt eingesetzt wird.

Wenn von den erfindungsgemäss eingesetzten Materialien, nämlich Siliziumoxid und Siliziumoxinitrid, gesprochen wird, so ist dies dahingehend zu verstehen, dass durchaus noch weitere Elemente vorhanden sein können, z.B. in einer Verbindung $SiO_xN_yR_z$ bei Siliziumoxinitrid, wobei z gegenüber x und y klein, ja sehr klein ist.

**Patentansprüche**

**1.** Verfahren zum Herstellen von Hybrid-Disks mit:

- einem ersten, in einem gegebenen Spektralband transparenten Substrat (1),

- dahinter, einem im genannten Band halbdurchlässigen Schichtsystem (2),

- dahinter, einem weiteren, im genannten Band transparenten Substrat (5),

- dahinter, einem Reflexionsschichtsystem (6),

**dadurch gekennzeichnet, dass** man über dem ersten, transparenten Substrat (1) ein Feuchtigkeitsschutzschichtsystem aus mindestens einer Schicht aus unterstöchiometrischem Siliziumoxid und/oder aus mindestens einer Schicht aus Siliziumoxinitrid ablegt.

2. Verfahren nach Anspruch 1, **dadurch gekennzeichnet, dass** man das halbdurchlässige Schichtsystem (2), das Reflexionsschichtsystem (6) sowie das Feuchtigkeitsschutzschichtsystem jeweils mit einem Vakuumbeschichtungsverfahren gleichen Typs ablegt.

3. Verfahren nach Anspruch 1 oder 2, **dadurch gekennzeichnet, dass** man das Feuchtigkeitsschutzschichtsystem durch Sputtern ablegt.

4. Verfahren nach einem der Ansprüche 1 bis 3, **dadurch gekennzeichnet, dass** man den Brechungsindex des Materials des Feuchtigkeits-Schutzschichtsystems höchstens gleich dem Brechungsindex des Materials des ersten, transparenten Substrates (1) wählt.

5. Verfahren nach einem der Ansprüche 1 bis 3, **dadurch gekennzeichnet, dass** bezüglich dem Brechungsindex n des Feuchtigkeits-Schutzschichtsystem-Materials folgendes gewählt wird:

$$1,47 \leq n \leq 1,7,$$

bevorzugt $1,5 \leq n \leq 1,6$,
insbesondere bevorzugt $n \leq 1,57$.

6. Verfahren nach einem der Ansprüche 1 bis 5, **dadurch gekennzeichnet, dass** für die Extinktionskonstante k des Feuchtigkeitsschutzschichtsystem-Materials gewählt wird:

$$10^{-4} \leq k \leq 5 \times 10^{-3}$$

bevorzugt $k \leq 10^{-3}$.

7. Verfahren nach einem der Ansprüche 1 bis 6, **dadurch gekennzeichnet, dass** man das Feuchtigkeitsschutzschichtsystem durch reaktives Sputtern eines Siliziumtargets in Sauerstoff und/oder Sauerstoff und Stickstoff enthaltender Atmosphäre ablegt.

8. Verfahren nach einem der Ansprüche 1 bis 7, **gekennzeichnet durch** Ablegen des Feuchtigkeitsschutzschichtsystems mit einer Systemdicke von mindestens 10 nm dabei, bevorzugterweise, von höchstens 50 nm.

9. Hybrid-Disk mit einem ersten, in einem gegebenen Spektralband transparenten Substrat, dahinter einem im gegebenen Band halbdurchlässigen Schichtsystem, dahinter einem weiteren, im gegebenen Band transparenten Substrat und, weiterhin dahinter, einem Reflexionsschichtsystem, **dadurch gekennzeichnet, dass** zwischen dem ersten Substrat und Umgebungsatmosphäre ein Feuchtigkeits-Schutzschichtsystem aus unterstöchiometrischem Siliziumoxid und/oder Siliziumoxinitrid vorhanden ist.

## Claims

1. Process for the production of hybrid discs with:

- a first substrate (1) transparent in a given spectral band,
- behind this a layer system (2) semi-transparent in said band,
- behind this a further substrate (5) transparent in said band,
- behind this a reflection layer system (6),

**characterised in that** over the first transparent substrate (1) is deposited a moisture protection layer system of at least one layer of sub-stoichiometric silicon oxide and/or at least one layer of silicon oxinitride.

2. Process according to claim 1, **characterised in that** the semi-transparent layer system (2), the reflection layer system (6) and the moisture protection layer system are each deposited by means of a vacuum coating process of the same type.

3. Process according to claim 1 or 2, **characterised in that** the moisture protection layer system is deposited by sputtering.

4. Process according to any of claims 1 to 3, **characterised in that** the refractive index of the material of the moisture protection layer system is selected at most equal to the refractive index of the material of the first transparent substrate (1).

5. Process according to any of claims 1 to 3, **characterised in that** the refractive index n of the moisture protection layer system material is selected as follows:

$$1.47 \leq n \leq 1.7,$$

$$\text{preferably } 1.5 \leq n \leq 1.6,$$

$$\text{in particular preferably } n \leq 1.57.$$

6. Process according to any of claims 1 to 5, **characterised in that** the extinction constant k of the moisture protection layer system material is selected as follows:

$$10^{-4} \leq k \leq 5 \times 10^{-3}$$

preferably $k \leq 10^{-3}$.

7. Process according to any of claims 1 to 6, **characterised in that** the moisture protection layer system is deposited by reactive sputtering of a silicon target in an atmosphere containing oxygen and/or oxygen and nitrogen.

8. Process according to any of claims 1 to 7, **characterised by** the deposition of the moisture protection layer system with a system thickness of at least 10 nm, preferably at most 50 nm.

9. Hybrid disc with a first substrate transparent in a given spectral band, behind this a layer system semi-transparent in the given band, behind this a further substrate transparent in the given band and further behind this a reflection layer system,
**characterised in that** between the first substrate and the ambient atmosphere there is a moisture protection layer system of sub-stoichiometric silicon oxide and/or silicon oxinitride.

**Revendications**

1. Procédé pour fabriquer des disques hybrides comprenant :

- un premier substrat (1) transparent dans une bande spectrale donnée,
- derrière, un système stratifié (2) semitransparent dans ladite bande,

- derrière, un autre substrat (5) transparent dans ladite bande,
- derrière, un système stratifié de réflexion (6),

**caractérisé en ce qu'**on dépose sur le premier substrat transparent (1) un système stratifié de protection contre l'humidité composé d'au moins une couche d'oxyde de silicium inférieure à la stoechiométrie et/ou d'au moins une couche d'oxynitrure de silicium.

2. Procédé selon la revendication 1, **caractérisé en ce qu'**on dépose le système stratifié semitransparent (2), le système stratifié de réflexion (6) et le système stratifié de protection contre l'humidité à l'aide d'un procédé de dépôt sous vide du même type.

3. Procédé selon la revendication 1 ou 2, **caractérisé en ce qu'**on dépose le système stratifié de protection contre l'humidité par pulvérisation cathodique.

4. Procédé selon l'une des revendications 1 à 3, **caractérisé en ce qu'**on choisit pour l'indice de réflexion du matériau du système stratifié de protection contre l'humidité une valeur au maximum égale à l'indice de réfraction du matériau du premier substrat transparent (1).

5. Procédé selon l'une des revendications 1 à 3, **caractérisé en ce que** pour l'indice de réfraction n du matériau du système stratifié de protection contre l'humidité, on choisit :

$$1,47 \leq n \leq 1,7,$$

de préférence $1,5 \leq n \leq 1,6$,
et plus spécialement $n \leq 1,57$.

6. Procédé selon l'une des revendications 1 à 5, **caractérisé en ce que** pour la constante d'extinction k du matériau du système stratifié de protection contre l'humidité, on choisit :

$$10^{-4} \leq k \leq 5 \times 10^{-3}$$

de préférence $k \times 10^{-3}$.

7. Procédé selon l'une des revendications 1 à 6, **caractérisé en ce qu'**on dépose le système stratifié de protection contre l'humidité par pulvérisation cathodique réactive d'une cible en silicium dans une atmosphère contenant de l'oxygène et/ou de l'oxygène et de l'azote.

8. Procédé selon l'une des revendications 1 à 7, **caractérisé par** le dépôt du système stratifié de protection contre l'humidité sur une épaisseur d'au moins 10 nm, de préférence de 50 nm au maximum.

9. Disque hybride comprenant un premier substrat transparent dans une bande spectrale donnée, et derrière celui-ci un système stratifié semitransparent dans ladite bande, et derrière celui-ci un autre substrat transparent dans ladite bande, et encore derrière celui-ci un système stratifié de réflexion, **caractérisé en ce qu'**il est prévu entre le premier substrat et l'atmosphère ambiante un système stratifié de protection contre l'humidité en oxyde de silicium inférieur à la stoechiométrie et/ou en oxynitrure de silicium.

FIG.1

FIG.2

radiale Deriation nach Exposition an 40°C und 95% rel. Luftfeuchtigkeit

FIG.3